# EUROPEAN PATENT SPECIFICATION

(11) **EP 1 320 220 B1**
(45) Date of publication and mention of the grant of the patent: **14.11.2007**
(21) Application number: 02255827.4
(22) Date of filing: 21.08.2002
(51) Int. Cl.: H04L 12/28

(54) **Sharing of hybrid resources in a wireless independent network**
Gemeinsame Nutzung von hybriden Ressourcen in einem drahtlosen unabhängigen Netz
Partage de ressources hybrides dans un réseau sans fil indépendant

(30) Priority: 12.12.2001 KR 2001078664
(43) Date of publication of application: 18.06.2003
(73) Proprietor: SAMSUNG ELECTRONICS CO. LTD., Suwon-city, Kyounggi-do 441-742 (KR)
(72) Inventor: Jang, Kyung-hun, Padal-gu, Suwon-city, Kyungki-do (KR)
(74) Representative: Exell, Jonathan Mark

(56) References cited:
- US-B1- 6 246 702
- PATENT ABSTRACTS OF JAPAN vol. 011, no. 249 (E-532), 13 August 1987 (1987-08-13) & JP 62 061442 A (CANON INC), 18 March 1987 (1987-03-18)
- PATENT ABSTRACTS OF JAPAN vol. 010, no. 363 (E-461), 5 December 1986 (1986-12-05) & JP 61 158236 A (MATSUSHITA ELECTRIC IND CO LTD), 17 July 1986 (1986-07-17)

## Description

The present invention relates to a wireless independent network based on carrier sense multiplexing access (CSMA)/collision avoidance (CA), and more particularly, to a method for sharing hybrid resources in a wireless independent network, a station for the method, and a data format for the method and the station.

Wireless independent networks wirelessly connect wireless stations in a predetermined area regardless of connections to base networks. For example, home networks wirelessly connecting information home electronics is a kind of wireless independent networks. Services in the wireless independent network are roughly classified into a real-time AudioVideo (AV) streaming service and non-real-time AV streaming service. The environment of such a wireless independent network is as follows.

First, since network subscribers' interests concentrate on a real-time AV streaming service in one independent network, it is rare for a large number of real-time AV services to coexist in one independent network.

Second, a small number of real-time AV streaming services and a large number of non-real-time AV streaming services can coexist in one independent network.

Third, the real-time AV streaming service uses a station that is the subject thereof and limited holding time exists in the service.

In the above-described wireless independent network environment, wireless stations (STAs) share wireless resources for communication. Here, a conventional resource-sharing method can be roughly classified into a distributed coordination method and a centralized control method.

The distributed coordination method uses a mechanism for minimizing possible collisions when stations attempt to use a data channel simultaneously. This mechanism is the IEEE 802.11a distributed coordination function (DCF) based on CSMA/CA. In a distributed coordination method using a DCF, random backoff numbers are created to minimize competition-based collisions, the backoff numbers are reduced by stages when a channel is idle for at least predetermined period (in case of IEEE 802.11, this is referred to as DCF Interframe Space (DIFS)), and data is transmitted when the backoff number becomes "0". The conventional distributed coordination method for grading priorities of the occupation of resources according to a specific type of data includes a Point Coordination Function (PCF) Interframe Space (PIFS) system and a Short Interframe Space (SIFS). Priorities of these systems are in the relationship DIFS > PIFS > SIFS, and a station using SIFS has priority over a station using DIFS. However, since a DCF system works on a probabilistic base, it is still possible for stations to collide.

In the centralized control method, one control station controls resources shared in a wireless independent network in a bundle. Thus, wireless stations share wireless resources according to the instructions of the control station. The centralized control method can be subdivided into a direct mode and an indirect mode. In the direct mode, a control station controls the timeslots for transmission and reception among wireless stations so that the wireless stations directly communicate with one another. The HiperLAN/2 standard is a representative example of the direct mode. In the indirect mode, transmission data of all stations is transmitted to the control station so that the wireless stations indirectly communicate with one another through the control station. This indirect mode is based on the Bluetooth standard.

Accordingly, in the above-described distributed coordination method, a specific control station is not required, a mesh network can be constituted, and an independent network can easily subscribe to and withdraw from the mesh network. However, the distributed coordination method uses resources ineffectively and can hardly support the real-time AV streaming service. Also, the centralized control method in the indirect mode can hardly support the real-time AV streaming service due to the forwarding of packets, concentrates load on the control station, and requires the selection of a substitute node when the control station withdraws from the subscribed network. Also, the centralized control method in the direct mode uses resources effectively, supports the real-time AV streaming service, and constitutes the mesh network. However, the centralized control method in the direct mode concentrates load on the control station and requires the selection of a substitute node when the control station withdraws from the subscribed network.

JP-A-62-061 442 describes a system that uses CSMA/CD communication. The equipment can select between token passing and CSMA/CD for real time data.

The above-described conventional resource-sharing methods have many problems since they have been developed based on non-real-time services, or due to inflexible structure of networks.

The present invention seeks to provide a method for sharing hybrid resources in a wireless independent network which can have the advantages of conventional resource-sharing methods by more efficiently analyzing the environment of the wireless independent network so that wireless resources are shared adaptive to the environment, thereby efficiently supporting real-time services as well as non-real-time services among the wireless stations.

The present invention also seeks to provide stations performing the hybrid resources sharing method.

In addition, the present invention seeks to provide formats of data transmitted among the stations.

According to a first aspect of the present invention, there is provided a method for sharing wireless hybrid resources among stations in a wireless independent network as set out in claim 1. It is determined whether currently transmitted data is related to a real-time service when the sharing of the wireless hybrid resources is controlled by a distributed coordination method. A sharing control authority is requested and received by the distributed coordination method, and the sharing of the wireless hybrid resources is controlled by a centralized control method in a direct mode until the real-time service ends if it is determined that the currently transmitted data is related to the real-time service. The sharing control authority corresponds to an authority which controls the sharing of the wireless hybrid resources.

According to a second aspect of the present invention, there is provided a station for performing the wireless hybrid resources sharing method as set out in claim 4. The station includes a transmission data checking unit and a first controller. The transmission data checking unit checks whether the currently transmitted data is related to the real-time service and generates a control signal in response to the checked result. The first controller requests and receives the sharing control authority by the distributed coordination method and controls the sharing of the wireless hybrid resources by the centralized control method in the direct mode until the real-time service ends, in response to the control signal.

Examples of the present invention will now be described in detail, with reference to the accompanying drawings in which:
FIG. 1 is a flowchart explaining a method for sharing hybrid resources in a wireless independent network according to the present invention;
FIG. 2 is a flowchart explaining a preferred embodiment of step 12 shown in FIG. 1 according to the present invention;
FIG. 3 is a block diagram of a station, according to the present invention, performing the hybrid resources sharing method shown in FIG. 1;
FIG. 4 is a block diagram of a preferred embodiment of the first controller shown in FIG. 3 according to the present invention;
FIGS. 5 (a), (b), and (c) are views showing data formats for the above-described hybrid resources sharing method and the station according to the present invention;
FIG. 6 is a view showing a preferred embodiment according to the present invention of a donwlink section shown in FIG. 5 (c); and
FIGS. 7 (a) and (b) are views explaining how the sharing control authority is obtained and how a message rejecting the request for the sharing control authority is received from a control station, respectively, after a message requesting a sharing control authority is broadcasted.

Hereinafter, a method for sharing hybrid resources in a wireless independent network according to the present invention will be described with reference to the attached drawings.

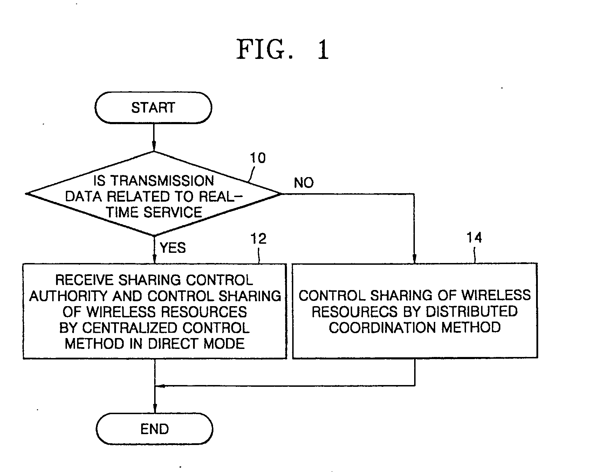

FIG. 1 is a flowchart explaining a method for sharing hybrid resources in a wireless independent network according to the present invention. The method is composed of steps 10 to 14 of controlling the sharing of wireless resources by a centralized control method in a direct mode or a distributed coordination method depending on whether real-time service-related data is transmitted.

In the hybrid resource-sharing method according to the present invention, in step 10, it is determined whether currently transmitted data is related to a real-time service when the sharing of the wireless resources is controlled based on the above-described distributed coordination method. For example, it is determined whether a real-time AV streaming service is generated, i.e, the real-time AV streaming service is provided via a wireless independent network.

If it is determined that the currently transmitted data is related to the real-time service when the sharing of the wireless resources is controlled by the distributed coordination method, in step 12, a station which is the subject of the real-time service (hereinafter referred to as "subject station") requests a sharing control authority by the distributed coordination method, is granted the sharing control authority after the request is admitted, and controls the sharing of the wireless resources by a centralized control method in a direct mode until a corresponding real-time service ends. Here, the subject station re-controls the sharing of the wireless resources by the distributed coordination method after the corresponding real-time service ends. The sharing control authority is an authority to control the sharing of the wireless resources.

Hereinafter, a preferred embodiment of step 12 according to the present invention will be described.

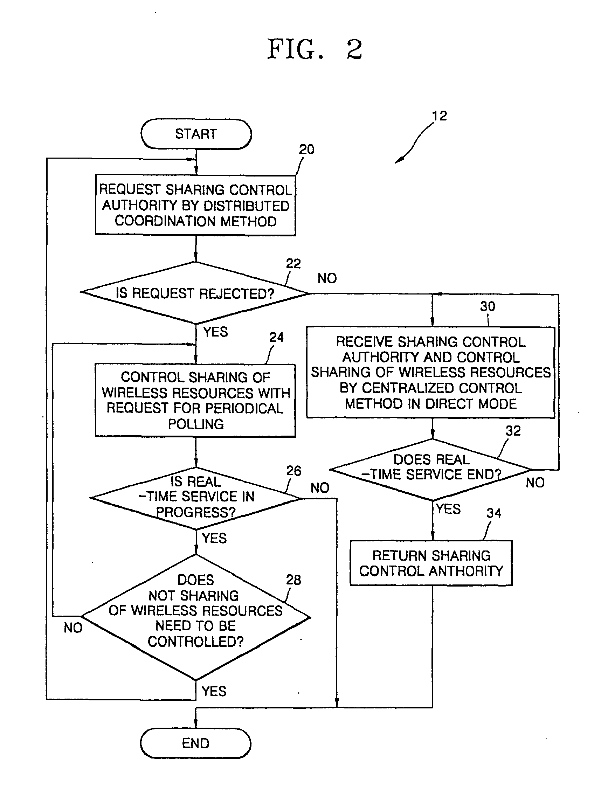

FIG. 2 is a flowchart explaining a preferred embodiment of step 12 shown in FIG. 1 according to the present invention. Step 12 is composed of steps 20 and 22 of requesting the sharing control authority, steps 24 through 28 of controlling the sharing of wireless resources with the request for periodical polling if the requested sharing control authority is rejected, and steps 30 through 34 of controlling the sharing of the wireless resources by the centralized control method in the direct mode until the real-time service ends if the requested sharing control authority is admitted.

If it is determined that the currently transmitted data is related to the real-time service, in step 20, the subject station requests the sharing control authority by the distributed coordination method, e.g., a DCF system. After step 20, in step 22, the subject station determines whether the request for sharing control authority is rejected. In other words, the subject station determines whether a station currently having a sharing control authority (hereinafter referred to as a "control station") exists. To perform this, the subject station may determine whether a message rejecting the request for the control authority is received from the control station.

If it is determined that the request for the sharing control authority is rejected, in step 24, the sharing of the wireless resources is controlled while the subject station requests the control station for periodical polling. For example, if the control station exists, since the subject station cannot be granted the sharing control authority, it is controlled by the control station to share the wireless resources and realizes a corresponding real-time AV streaming service-related communication.

After step 24, in step 26, the subject station determines whether the real-time service is in process. If it is determined that the real-time service is in process, in step 28, the subject station determines whether the sharing of the wireless resources does not need to be controlled. In other words, if it is determined that the real-time service is in process, the subject station determines whether a control authority releasing message is received from the control station.

If it is determined through the periodical polling that the sharing of the wireless resources does not need to be controlled by the control station for performing the corresponding real-time service-related communication, the process goes back to step 20. In other words, when the subject station does not need to be controlled by the control station any more, it requests the acquisition of the sharing control authority by the distributed coordination method again. However, if it is determined that the subject stations still needs to be controlled by the control station to share the wireless resources when the real-time service is in progress, the process goes back to step 24.

If it is determined that the request for the sharing control authority is not rejected, in step 30, the subject station is granted the sharing control authority and controls the sharing of the wireless resources by the centralized control method in the direct mode. After step 30, in step 32, it is determined whether the real-time service ends. If it is determined that the real-time service does not end, the process goes back to step 30 so that the subject station still has the sharing control authority. However, if it is determined that the real-time service ends, in step 34, the subject station broadcasts the control authority releasing message to the other stations to return the sharing control authority.

Here, if it is determined that the real-time service is not in progress in step 26 or after step 34, the subject station controls the sharing of the wireless resources by the distributed coordination method.

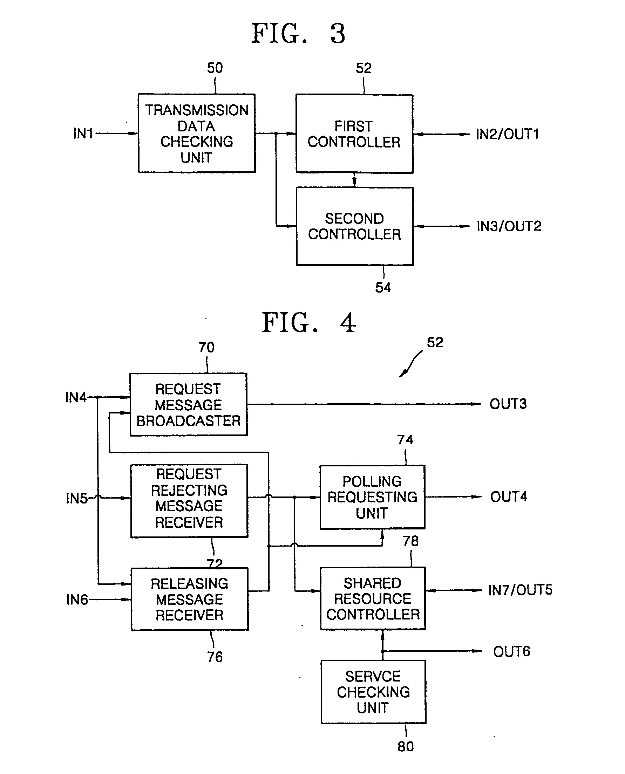

Hereinafter, a preferred embodiment, according to the present invention, showing the structure and operation of stations in an independent network performing the previously described hybrid resources sharing method will be described with reference to FIGS. 3 and 4.

FIG. 3 is a block diagram of a station performing the hybrid resources sharing method shown in FIG. 1, according to the present invention. The station is composed of a transmission data checking unit 50, and first and second controllers 52 and 54, resptectively.

For a better understanding of the present invention, the structure and operation of the station shown in FIG. 3 will be described on the assumption that the station is a subject station.

The transmission data checking unit 50 checks whether currently transmitted data input via an input port IN1 is related to a real-time service and outputs a control signal generated in response to the check result to the first and second controllers 52 and 54.

The first controller 52 is granted a sharing control authority by a distributed coordination method in response to the control signal input from the transmission data checking unit 50 and controls the sharing of wireless resources on a central controls system in a direct mode until the real-time service ends. To perform this, if it is perceived through the control signal that data input via the input port IN1 is tranmission data for the real-time service, the first controller 52 outputs a signal for requesting the sharing control authority to the other stations via an output port OUT1 and checks whether a message rejecting the request for the sharing control authority is received from another station, e.g., a control station (not shown), via the input port IN1. Here, if the first controller 52 is granted the sharing control authority, data input through the input port IN1 via the transmission data checking unit 50 is transmitted to a corresponding station (not shown) via the output port OUT1.

The second controller 54 controls the sharing of the wireless resources by the distributed coordination method in response to the control signal input from the transmission data checking unit 50. Here, the second controller 54 receives data from another station via an input port IN3 and outputs the data input through the input port IN1 via the transmission data checking unit 50 to another station via an output port OUT2. Here, the second controller 54 may control the sharing of the wireless resources by the distributed coordination method in response to an ending signal generated when the real-time services ends in the firs controller 52.

The structure and operation of a preferred embodiment of the first controller 52 shown in FIG. 3 according to the present invention will now be described.

FIG. 4 is a block diagram of the preferred embodiment of the first controller 52 shown in FIG. 3. The first controller 52 includes a request message broadcaster 70, a request rejecting message receiver 72, a polling requesting unit 74, a releasing message receiver 76, a shared resource controller 78, and a service checking unit 80.

To perform step 20, the request message broadcaster 70 shown in FIG. 4 broadcasts the control authority requesting message to the other stations via an output port OUT3 by the distributed coordination method in response to the control signal input from the transmission data checking unit 50 via an input port IN4 and an enable signal input from the releasing message receiver 76.

To perform step 22, the request rejecting message receiver 72 receives the message rejecting the request for the sharing control authority via an input port IN5 and outputs the received message as an disable signal to the polling requesting unit 74 and the shared resource controller 78. As described previously, when the control station exists, the message rejecting the request for the sharing control authority is input to the request rejecting message receiver 72 via the input port IN5.

The polling requesting unit 74, which performs step 24, requests the periodical polling from the control station via an output port OUT4 in response to the disable signal input from the request rejecting message receiver 72 and the enable signal input from the releasing message receiver 76. For example, the polling requesting unit 74 requests the periodical polling from the control station via the output port OUT4 if it is perceived that the message rejecting the requires for the sharing control authority is received via the input port IN5 through the disable signal input from the request rejecting message receiver 72.

To perform steps 26 and 28, the releasing message receiver 76 receives the sharing control authority releasing message via an input port IN6 in response to the control signal input from the transmission data checking unit 50 via the input port IN4 and outputs the received message as an enable signal to the request message broadcaster 70 and the polling requesting unit 74. For example, the releasing message receiver 76 can receive the control authority releasing message via the input port IN6 if it is perceived that the real-time service is in progress through the control signal input via the input port IN4. Thus, in step 20, the request message broadcaster 70 broadcasts the control authority requesting message to the other stations via the output port OUT3 by the distributed coordination method if it is perceived that the control authority releasing message is received from the control station through the enable signal input from the releasing message receiver 76. In step 24, the polling requesting unit 74 requests the periodical polling from the control station via the output port OUT4 if it is perceived that the sharing control authority releasing message is not received from the control station through the enable signal input from the releasing message receiver 76. Here, the sharing control authority releasing message is broadcasted from the control station to the subject station when the control station does not control the subject station any more.

For this, the releasing message receiver 76 may generate an enable signal having a first logic level if the sharing control authority releasing message is received from the control station and an enable signal having a second logic level if the control authority releasing message is not received from the control station.

The shared resource controller 78, which performs steps 30 and 34, is granted the sharing control authority in response to the disable signal input from the request rejecting message receiver 72 and controls the sharing of the wireless resources by the centralized control method in the direct mode. For example, the shared resource controller 78 controls the sharing of the wireless resources by the centralized control method in the direct mode if it is perceived that the message rejecting the request for the sharing control authority is not received through the disable signal input from the request rejecting message receiver 72. Here, the shared resource controller 78 receives data from another station via an input port IN7 or outputs data for the real-time service to another station via an output port OUT5. Also, in step 34, the shared resource controller 78 transmits the sharing control authority releasing message to another station via the output port OUT5 to return the sharing control authority in response to the ending signal input from the service checking unit 80.

The service checking unit 80, which performs step 32, checks whether the real-time service ends, outputs the checked result as the ending signal to the shared resource controller 78 and to the second controller 54 via the output port OUT6. Here, the second controller 54 controls the sharing of the wireless resources by the distributed coordination method in response to the ending signal input from the service checking unit 80.

Hereinafter, data format for the hybrid resource-sharing method and the station according to the present invention will be described with reference to the attached drawings.

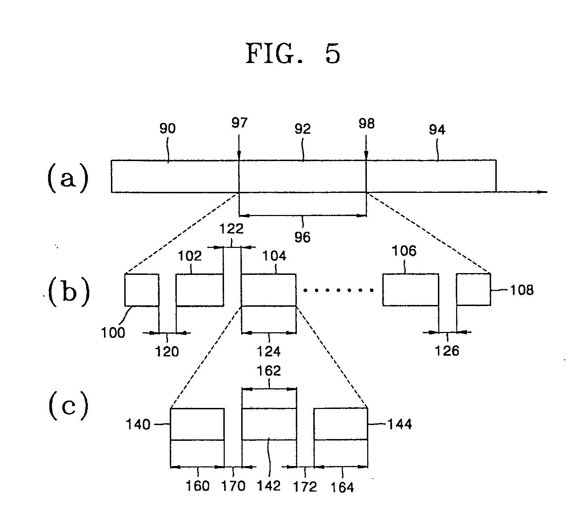

FIGS. 5 (a), (b), and (c) are views showing data formats for the above-described resource-sharing method and the station according to the present invention. FIG. 5 (a) shows sections of the data, (b) shows the data format of a section according to the present invention, and (c) shows a format of a transmission frame.

Step 10 is performed by a distributed coordination method section 90 shown in FIG. 5 (a). Here, if it is determined that currently transmitted data is related to the real-time service, step 12 is performed in an adaptive control method section 92 shown in FIG. 5 (a). For this, the subject station obtains the sharing control authority at a starting point 97 of the adaptive control system section 92. Here, the length 96 of the adaptive control system section 92 may vary. When the real-time service ends during step 12 in the adaptive control system section 92, the subject station returns the sharing control authority at an ending point 98 of the adaptive control system section 92.

According to the present invention, as shown in FIG. 5 (b), the adaptive control system section 92 shown in FIG. 5 (a) is composed of a control authority requesting message 100, a series of first through nth transmission frames 102, 104, ..., and 106, and a control authority releasing message 108. Here, the first transmission frame 102 is spaced apart from the control authority requesting message 100 by a PIFS 120 and the nth transmission frame 106 is spaced apart from the control authority releasing message 108 by a PIFS 126. The first through nth transmission frames 102, 104, ..., and 106 are spaced apart from each other by a PIFS 122 to have priority of the occupation of the resources over DCF-based wireless stations. Here, the first through nth transmission frames 102, 104, ..., and 106 have lengths 124, respectively, which vary depending on characteristics of a corresponding AV streaming service.

According to the present invention, as shown in FIG. 5 (c), each of the first through nth transmission frames 102, 104, ..., and 106 is composed of a downlink section 140, a polling section 142, and a distribution control section 144. Here, in the downlink section 140, real-time service-related transmission data is transmitted to another station and the downlink section 140 has a variable length 160. Also, in the polling section 142, other real-time service-related stations are polled, the polling section 142 has a variable length 162, and a multiplex polling system can be used to improve its function. In the polling section 142, a packet is forwarded from the subject station to the control station or another station. In the distribution control section 144, non-real-time service-related transmission data is transmitted to another station, a DCF system is used, and the distribution control section 144 has a variable length 164. If an additional real-time AV streaming service is generated, the message requesting the periodical polling may be transmitted to the control station. Here, the downlink section 140 is spaced apart from the polling section 142 by a PIFS 170. The polling section 142 is spaced apart from the distribution control section 144 by a DIFS 172.

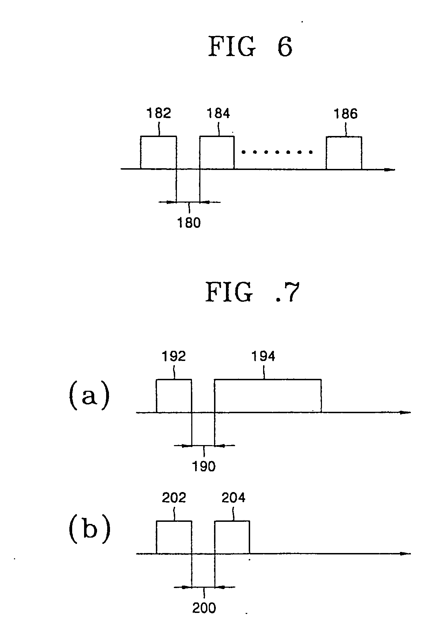

FIG. 6 is a view of a preferred embodiment of the downlink section 140 of FIG. 5 (c), according to the present invention, which includes a plurality of packets 182, 184, ..., and 186. Referring to FIG. 6, the plurality of packets 182, 184, ..., and 186 are spaced apart from each other by a PIFS 180 to maintain the sharing control authority for the downlink section 140.

FIGS. 7 (a) and (b) are views explaining how the sharing control authority is obtained and how the message rejecting the request for the sharing control authority is received from the control station, respectively, after the message requesting the sharing control authority is broadcasted. In FIG. 7 (a), there is no control station while in FIG. 7 (b), there is a control station.

As shown in FIG. 7 (a), after the request message broadcaster 70 broadcasts a control authority requesting message 192 via the output port OUT3, the shared resource controller 78 shown in FIG. 4 is idle for a PIFS 190 and then is granted a sharing control authority 194.

The request rejecting message receiver 72 shown in FIG. 4 receives a control authority request rejecting message 204 from the control station when a SIFS 200 elapses after the request message broadcaster 70 broadcasts a control authority requesting message 202.

As described above, in a method for sharing hybrid resources in a wireless independent network, a station for the method, and a data format for the method and the station, non-real-time service-related data packets are transmitted/received by a distributed coordination method and real-time service-related data packets are transmitted/received by a centralized control method in a direct mode. In other words, hybrid data is transmitted and received in a wireless independent network. Thus, an efficiency of using resources is maximized, a real-time service of the resources is supported, and it is possible to constitute a mesh network. Also, load can be prevented from concentrating in a control station and the control station is not fixed. As a result, a station can freely subscribe/withdraw to/from a subscribed network.

## Claims

1. A method for sharing wireless hybrid resources among stations in a wireless independent network, the method comprising:
(a) determining (10) whether currently transmitted data is related to a real-time service when the sharing of the wireless hybrid resources is controlled by a distributed coordination method; and
(b) if it is determined that the currently transmitted data is related to the real-time service, requesting and receiving (12) a sharing control authority for controlling the sharing of the wireless hybrid resources by a centralized control method in a direct mode until the real-time service ends, by:
(b1) requesting (20) the sharing control authority to all stations by the distributed coordination method if it is determined that the currently transmitted data is related to the real-time service;
(b2) determining (22) whether the request for the sharing control authority is rejected; and
(b3) if the request is rejected controlling (24) the sharing of the wireless hybrid resources with a request for periodical polling, and if the request is approved, controlling the sharing of the wireless hybrid resources by the centralized control method;
wherein the sharing control authority corresponds to an authority which controls the sharing of the wireless hybrid resources.

2. The method of claim 1, further comprising (c) controlling (14) the sharing of the wireless hybrid resources by the distributed coordination method if it is determined that the currently transmitted data is not related to the real-time service.

3. A method according to claim 1 or 2 wherein step (b) further comprises:
(b4) determining (28) whether the sharing of the wireless hybrid resources does not need to be controlled during the real-time service, going back to step (b1) if it is determined that the sharing of the wireless hybrid resources does not need to be controlled during the real-time service, and going back to step (b3) if it is determined the sharing of the wireless hybrid resources still needs to be controlled during the real-time service;
(b5) receiving (30) the sharing control authority and controlling the sharing of the wireless hybrid resources by the centralized control method in the direct mode if it is determined that the request for the sharing control system is not rejected;
(b6) determining (32) whether the real-time service ends and going back to step (b5) if it is determined that the real-time service does not end; and
(b7) returning (34) the sharing control authority if it is determined that the real-time service ends, and then controlling the sharing of the wireless hybrid resources by the distributed coordination method

4. A station for performing the wireless hybrid resources sharing method according to claim 1, 2 or 3, the station comprising:
a transmission data checking unit (50) arranged to check whether the currently transmitted data is related to the real-time service and to generate a control signal in response to the checked result; and
a first controller (52) arranged to request and receive a sharing control authority by the distributed coordination method and to control the sharing of the wireless hybrid resources by the centralized control method in the direct mode until the real-time service ends, in response to the control signal;
wherein the first controller comprises:
a request message broadcaster (70) arranged to broadcast a control authority requesting message requesting the sharing control authority by the distributed coordination method in response to the control signal and an enable signal;
a request rejecting message receiver (72) arranged to receive a control authority request rejecting message rejecting the request for the sharing control authority and to output a disable signal in response to the received result; and
a polling requesting unit (74) arranged to request periodical polling in response to the disable signal.

5. The station of claim 4, further comprising a second controller (54) arranged to control the sharing of the wireless hybrid resources by the distributed coordination method in response to the control signal.

6. The station of claim 5, further comprising:
a releasing message receiver (76) arranged to receive a control authority releasing message in response to the control signal and outputs the enable signal in response to the received result;
a shared resource controller (78) arranged to receive the sharing control authority in response to the disable signal and controls the sharing of the wireless hybrid resources by the centralized control method in the direct mode and transmits the sharing control authority releasing message to another station and returns the sharing control authority in response to an ending signal; and
a service checking unit (80) arranged to check whether the real-time service ends and outputs the checked result as the ending signal;
wherein the second controller (54) is arranged to control the sharing of wireless hybrid resources by the distributed coordination method in response to the ending signal output by the service checking unit (80).

## Patentansprüche

1. Verfahren zur gemeinsamen Nutzung von drahtlosen hybriden Ressourcen bei Stationen in einem drahtlosen unabhängigen Netzwerk, wobei das Verfahren umfasst:
(a) Bestimmen (10), ob momentan übertragene Daten einen Echtzeitdienst betreffen, wenn die gemeinsame Nutzung der drahtlosen hybriden Ressourcen von einem Verfahren mit Distributed Coordination gesteuert wird, und
(b) wenn bestimmt ist, dass die momentan übertragenen Daten den Echtzeitdienst betreffen, Anfordern und Empfangen (12) einer Steuerbefugnis zur gemeinsamen Nutzung zur Steuerung der gemeinsamen Nutzung der drahtlosen hybriden Ressourcen durch ein Verfahren mit zentraler Steuerung in einem Direktmodus, bis der Echtzeitdienst endet, durch:
(b1) Anfordern (20) der Steuerbefugnis zur gemeinsamen Nutzung für alle Stationen durch das Verfahren mit Distributed Coordination, wenn bestimmt ist, dass die momentan übertragenen Daten den Echtzeitdienst betreffen,
(b2) Bestimmen (22), ob die Anfrage nach der Steuerbefugnis zur gemeinsamen Nutzung zurückgewiesen ist, und
(b3) wenn die Anfrage zurückgewiesen ist, Steuern (24) der gemeinsamen Nutzung der drahtlosen hybriden Ressourcen mit einer Anfrage nach periodischem Polling, und wenn die Anfrage zugelassen ist, Steuern der gemeinsamen Nutzung von drahtlosen hybriden Ressourcen durch das Verfahren mit zentraler Steuerung,
wobei die Steuerbefugnis zur gemeinsamen Nutzung einer Befugnis entspricht, die die gemeinsame Nutzung der drahtlosen hybriden Ressourcen steuert.

2. Verfahren nach Anspruch 1, ferner umfassend (c) Steuern (14) der gemeinsamen Nutzung der drahtlosen hybriden Ressourcen durch das Verfahren mit Distributed Coordination, wenn bestimmt ist, dass die momentan übertragenen Daten den Echtzeitdienst nicht betreffen.

3. Verfahren nach Anspruch 1 oder 2, wobei Schritt (b) ferner umfasst:
(b4) Bestimmen (28), ob die gemeinsame Nutzung der drahtlosen hybriden Ressourcen während des Echtzeitdiensts nicht gesteuert werden muss, wobei es zu Schritt (b1) zurückkehrt, wenn bestimmt ist, dass die gemeinsame Nutzung der drahtlosen hybriden Ressourcen während des Echtzeitdiensts nicht gesteuert werden muss, und es zu Schritt (b3) zurückkehrt, wenn bestimmt ist, dass die gemeinsame Nutzung der drahtlosen hybriden Ressourcen während des Echtzeitdiensts noch gesteuert werden muss,
(b5) Empfangen (30) der Steuerbefugnis zur gemeinsamen Nutzung und Steuern der gemeinsamen Nutzung der drahtlosen hybriden Ressourcen durch das Verfahren mit zentraler Steuerung im Direktmodus, wenn bestimmt ist, dass die Anfrage nach dem Steuersystem zur gemeinsamen Nutzung nicht zurückgewiesen ist,
(b6) Bestimmen (32), ob der Echtzeitdienst endet, und Rückkehr zu Schritt (b5), wenn bestimmt ist, dass der Echtzeitdienst nicht endet, und
(b7) Rückgabe (34) der Steuerbefugnis zur gemeinsamen Nutzung, wenn bestimmt ist, dass der Echtzeitdienst endet, und dann Steuern der gemeinsamen Nutzung der drahtlosen hybriden Ressourcen durch das Verfahren mit Distributed Coordination.

4. Station zur Durchführung des Verfahrens zur gemeinsamen Nutzung von hybriden Ressourcen nach Anspruch 1, 2 oder 3, wobei die Station umfasst:
eine Übertragungsdatenprüfeinheit (50), die so ausgebildet ist, dass sie prüft, ob die momentan übertragenen Daten den Echtzeitdienst betreffen, und in Abhängigkeit vom Prüfergebnis ein Steuersignal erzeugt, und
eine erste Steuerung (52), die so ausgebildet ist, dass sie eine Steuerbefugnis zur gemeinsamen Nutzung durch das Verfahren mit Distributed Coordination anfordert und empfängt und in Abhängigkeit vom Steuersignal die gemeinsame Nutzung der drahtlosen hybriden Ressourcen durch das Verfahren mit zentraler Steuerung im Direktmodus steuert, bis der Echtzeitdienst endet,
wobei die erste Steuerung umfasst:
einen Anfragemeldungssender (70), der so ausgebildet ist, dass er eine Steuerbefugnisanfragemeldung sendet, die die Steuerbefugnis zur gemeinsamen Nutzung durch das Verfahren mit Distributed Coordination in Abhängigkeit vom Steuersignal und einem Freigabesignal anfordert,
einen Anfragezurückweisungsmeldungsempfänger (72), der so ausgebildet ist, dass er eine Zurückweisungsmeldung der Steuerbefugnisanfrage empfängt, die die Anfrage nach der Steuerbefugnis zur gemeinsamen Nutzung zurückweist, und in Abhängigkeit vom empfangenen Ergebnis ein Sperrsignal ausgibt, und
eine Pollinganfrageeinheit (74), die so ausgebildet ist, dass sie periodisches Polling in Abhängigkeit vom Sperrsignal anfordert.

5. Station nach Anspruch 4, ferner umfassend eine zweite Steuerung (54), die so ausgebildet ist, dass sie gemeinsame Nutzung der drahtlosen hybriden Ressourcen durch das Verfahren mit Distributed Coordination in Abhängigkeit vom Steuersignal steuert.

6. Station nach Anspruch 5, ferner umfassend:
einen Auslösemeldungsempfänger (76), der so ausgebildet ist, dass er eine Steuerbefugnisauslösemeldung in Abhängigkeit vom Steuersignal empfängt und das Freigabesignal in Abhängigkeit vom empfangenen Ergebnis ausgibt,
eine Steuerung (78) für gemeinsame Ressourcen, die so ausgebildet ist, dass sie die Steuerbefugnis zur gemeinsamen Nutzung in Abhängigkeit vom Sperrsignal empfängt und die gemeinsame Nutzung der drahtlosen hybriden Ressourcen durch das Verfahren mit zentraler Steuerung im Direktmodus steuert und die Auslösemeldung der Steuerbefugnis zur gemeinsamen Nutzung zu einer anderen Station überträgt und die Steuerbefugnis zur gemeinsamen Nutzung in Abhängigkeit von einem Endesignal zurückgibt, und
eine Dienstprüfeinheit (80), die so ausgebildet ist, dass sie prüft, ob der Echtzeitdienst endet, und das Prüfergebnis als das Endesignal ausgibt,
wobei die zweite Steuerung (54) so ausgebildet ist, dass sie die gemeinsame Nutzung der drahtlosen hybriden Ressourcen durch das Verfahren mit Distributed Coordination in Abhängigkeit vom Endesignal, das von der Dienstprüfeinheit (80) ausgegeben ist, steuert.

## Revendications

1. Procédé pour partager des ressources hybrides sans fil entre des stations dans un réseau sans fil indépendant, le procédé comprenant :
(a) le fait de déterminer (10) si des données transmises actuellement sont associées à un service en temps réel lorsque le partage des ressources hybrides sans fil est commandé par un procédé de coordination distribuée ; et
(b) s'il est déterminé que les données transmises actuellement sont associées au service en temps réel, le fait de demander et recevoir (12) une autorité de commande de partage, pour commander le partage des ressources hybrides sans fil au moyen d'un procédé de commande centralisée dans un mode direct jusqu'à ce que le service en temps réel soit terminé, en :
(b1) demandant (20) l'autorité de commande de partage sur toutes les stations au moyen du procédé de coordination distribuée s'il est déterminé que les données transmises actuellement sont associées au service en temps réel ;
(b2) déterminant (22) si la demande d'autorité de commande de partage est rejetée ; et
(b3) si la demande est rejetée, commandant (24) le partage des ressources hybrides sans fil avec une demande de scrutation périodique, et si la demande est approuvée, commandant le partage des ressources hybrides sans fil au moyen du procédé de commande centralisée ;
dans lequel l'autorité de commande de partage correspond à une autorité qui commande le partage des ressources hybrides sans fil.

2. Procédé selon la revendication 1, comprenant en outre (c) le fait de commander (14) le partage des ressources hybrides sans fil au moyen du procédé de coordination distribuée s'il est déterminé que les données transmises actuellement ne sont pas associées au service en temps réel.

3. Procédé selon la revendication 1 ou 2, dans lequel l'étape (b) comprend en outre :
(b4) le fait de déterminer (28) si le partage des ressources hybrides sans fil n'a pas besoin d'être commandé durant le service en temps réel, retourner à l'étape (b1) s'il est déterminé que le partage des ressources hybrides sans fil n'a pas besoin d'être commandé durant le service en temps réel, et retourner à l'étape (b3) s'il est déterminé que le partage des ressources hybrides sans fil a toujours besoin d'être commandé durant le service en temps réel ;
(b5) le fait de recevoir (30) l'autorité de commande de partage et commander le partage des ressources hybrides sans fil au moyen du procédé de commande centralisée dans le mode direct s'il est déterminé que la demande du système de commande de partage n'est pas rejetée ;
(b6) le fait de déterminer (32) si le service en temps réel est terminé et retourner à l'étape (b5 ) s'il est déterminé que le service en temps réel n'est pas terminé ; et
(b7) le fait de retourner (34) l'autorité de commande de partage s'il est déterminé que le service en temps réel est terminé, puis commander le partage des ressources hybrides sans fil au moyen du procédé de coordination distribuée.

4. Station pour exécuter le procédé de partage des ressources hybrides sans fil selon la revendication 1, 2 ou 3, la station comprenant :
une unité de vérification de données de transmission (50) agencée pour vérifier si les données transmises actuellement sont associées au service en temps réel et pour générer un signal de commande en réponse au résultat vérifié ; et
un premier contrôleur (52) agencé pour demander et recevoir une autorité de commande de partage au moyen du procédé de coordination distribuée et pour commander le partage des ressources hybrides sans fil au moyen du procédé de commande centralisée dans le mode direct jusqu'à ce que le service en temps réel soit terminé, en réponse au signal de commande ;
dans lequel le premier contrôleur comprend :
un diffuseur de message de demande (70) agencé pour diffuser un message de demande d'autorité de commande demandant l'autorité de commande de partage au moyen du procédé de coordination distribuée en réponse au signal de commande et à un signal d'activation ;
un récepteur de message de rejet de demande (72) agencé pour recevoir un message de rejet de demande d'autorité de commande rejetant la demande d'autorité de commande de partage et pour émettre un signal de désactivation en réponse au résultat reçu ; et
une unité de demande de scrutation (74) agencée pour demander une scrutation périodique en réponse au signal de désactivation.

5. Station selon la revendication 4, comprenant en outre un second contrôleur (54) agencé pour commander le partage des ressources hybrides sans fil au moyen du procédé de coordination distribuée en réponse au signal de commande.

6. Station selon la revendication 5, comprenant en outre :
un récepteur de message de libération (76) agencé pour recevoir un message de libération d'autorité de commande en réponse au signal de commande et qui émet le signal d'activation en réponse au résultat reçu ;
un contrôleur de ressources partagées (78) agencé pour recevoir l'autorité de commande de partage en réponse au signal de désactivation et qui commande le partage des ressources hybrides sans fil au moyen du procédé de commande centralisée dans le mode direct et transmet le message de libération d'autorité de commande de partage à une autre station et retourne l'autorité de commande de partage en réponse à un signal de fin ; et
une unité de vérification de service (80) agencée pour vérifier si le service en temps réel est terminé et qui émet le résultat vérifié comme signal de fin ;
dans laquelle le second contrôleur (54) est agencé pour commander le partage des ressources hybrides sans fil au moyen du procédé de coordination distribuée en réponse à l'émission du signal de fin par l'unité de vérification de service (80).
